# EUROPEAN PATENT SPECIFICATION

(11) **EP 0 701 248 B1**
(45) Date of publication and mention of the grant of the patent: **25.07.2001**
(21) Application number: 95113552.4
(22) Date of filing: 29.08.1995
(51) Int. Cl.: G11B 5/55, G11B 5/596

(54) **Magnetic disk apparatus**
Magnetisches Plattenspeichergerät
Appareil à disque magnétique

(30) Priority: 09.09.1994 JP 21558994
(43) Date of publication of application: 13.03.1996
(73) Proprietor: Hitachi, Ltd., Chiyoda-ku, Tokyo 101 (JP)
(72) Inventor: Seo, Yosuke, Sagamihara-shi (JP); Shishida, Kazuhisa, Odawara-shi (JP); Yamaguchi, Takashi, Tsuchiura-shi (JP)
(74) Representative: Strehl Schübel-Hopf & Partner

(56) References cited:
- WO-A-89/01685
- WO-A-91/02354
- GB-A- 2 286 481
- PATENT ABSTRACTS OF JAPAN vol. 12 no. 178 (P-708) ,26 May 1988 & JP-A-62 287407 (SONY) 14 December 1987,

## Description

### BACKGROUND OF THE INVENTION

The present invention relates to a magnetic disk apparatus according to the preamble of claim 1, having servo information on a data surface and, more particularly, to a servo pattern which has a detection sensitivity distribution in a direction of a track as in a magneto-resistive head (hereinbelow referred to as an MR head) and is suitable for a reproducing head in which a linear reproducing area width is relatively narrower than that of a conventional inductive head.

As a magnetic disk apparatus having a servo function, there are an apparatus having a dedicated servo surface which is used only for a servo, an apparatus having servo information on a surface to record data, and an apparatus using both of the above two types. In the dedicated servo surface, since a width of the servo head is not restricted, a head wider than a track pitch is used in order to realize an improvement of a recording efficiency of a position signal, a reduction of a frequency upon seeking, and an assurance of linearity of the position.

On the other hand, on the data surface, a width of the head is 70% to 80% of the track pitch from a viewpoint of the recording and reproduction of data. Therefore, according to JP-A-4-98661, in order to obtain the linearity of the position signal on the data surface, a two-phase pattern whose pattern period is set to a two-track pitch is recorded.

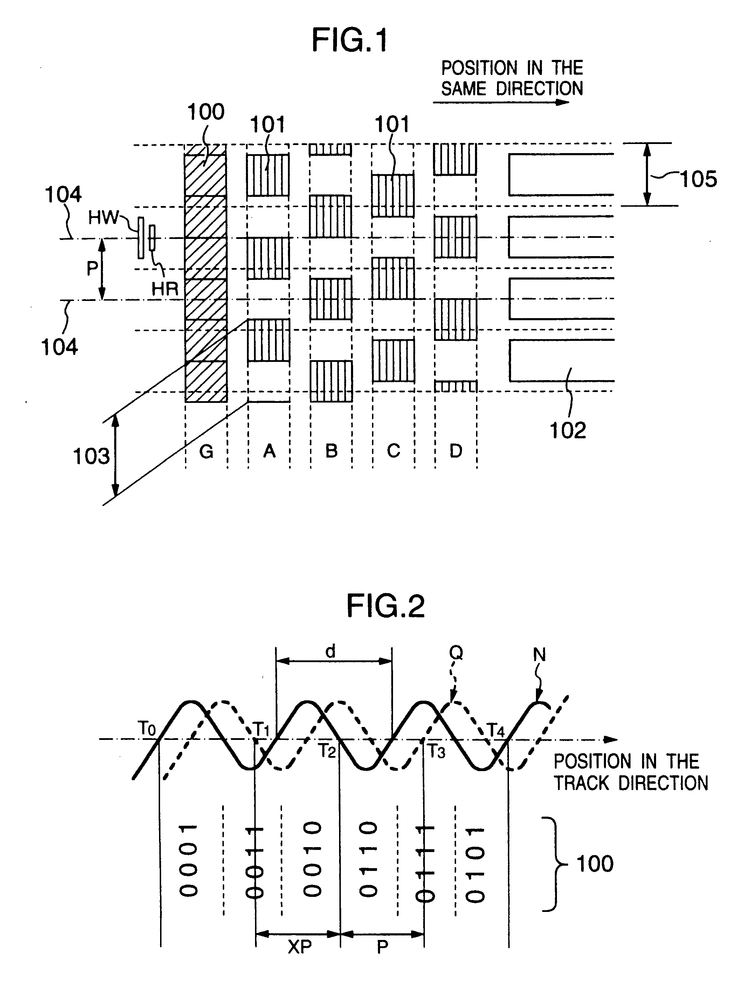

In a sector servo method whereby servo information is interspersed as in the above prior art or the like, in order to decide a position upon seeking, an identification (ID) code called a gray code which differs by only one bit every track is generally used. Since such a track identification (ID) code (Fig. 1, 100) can decide a range of two tracks on a construction, an arbitrary position can be decided when also considering that the two-phase servo pattern is a repeat of the two-track pitch.

WO91/02354 discloses a disk drive system using a gray code field band consisting of track ID codes overlapping each other and being written across the entire track width. Each portion of the gray code (Nᵢ) is associated with one track (Tᵢ) and the remainder of the gray code portion (Nᵢ₊₁) from the adjacent track is located on the same track (Tᵢ) . In such a system, despite the overlapping track ID codes, the track ID codes exactly correspond to the track numbers. Four servo bursts (A, B, C, D) are distributed along the radial length with an offset from the adjacent burst by a distance of one half of the data track width. The pattern period of the servo bursts is equal to the two-track pitch. Such a servo system corresponds to that described in the preamble of claim 1.

### SUMMARY OF THE INVENTION

It is an object of the present invention to provide a magnetic disk apparatus which can record accurately at a high density without widening a track ID code and a servo area.

Namely, it is an object of the present invention to improve a linearity of positional signals in a magnetic disk apparatus provided with a head having a detection sensitivity in a direction of a track like an MR head, without widening a track ID code and a servo area.

The above conventional technique has been developed in an inductive head in which a recording head is also used as a reproducing head commonly used. A width of such a head is equal to or larger than 70% of a track pitch and a detection sensitivity in the track direction of the head is almost constant. In a separating type head in which a recording head and a reproducing head are separated, however, there is also a case where a width of the reproducing head is equal to or less than 70% of the track pitch. In the case where a detection sensitivity has a distribution in the direction of the track width like an MR head, particularly, it has been found that a case where an effective width such that a good linearity for the position is obtained is equal to or less than 1/2 of the track pitch occurs.

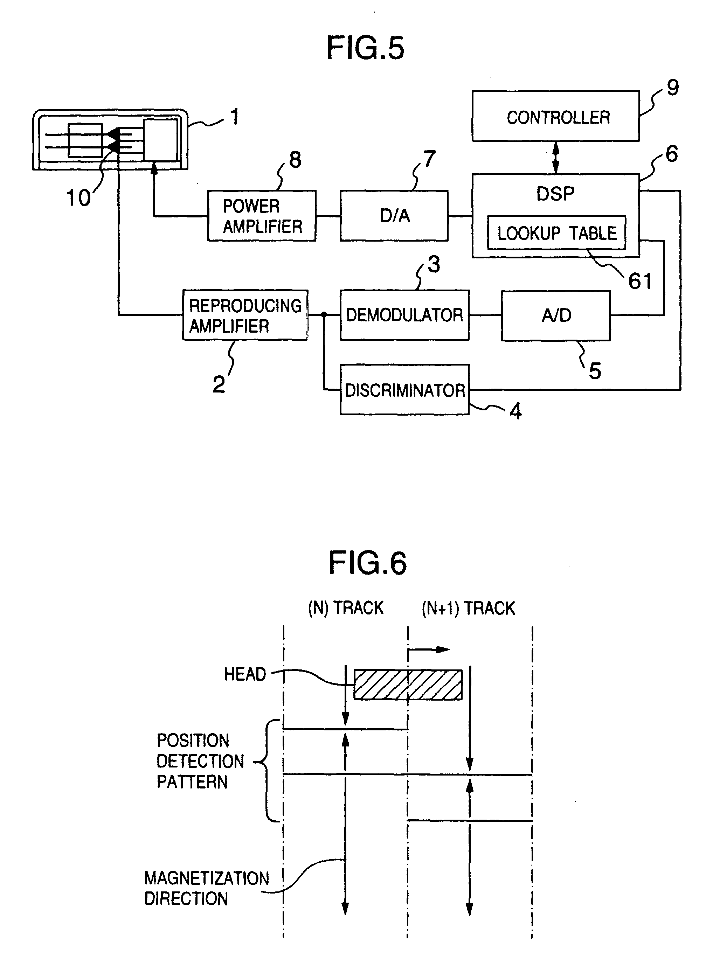

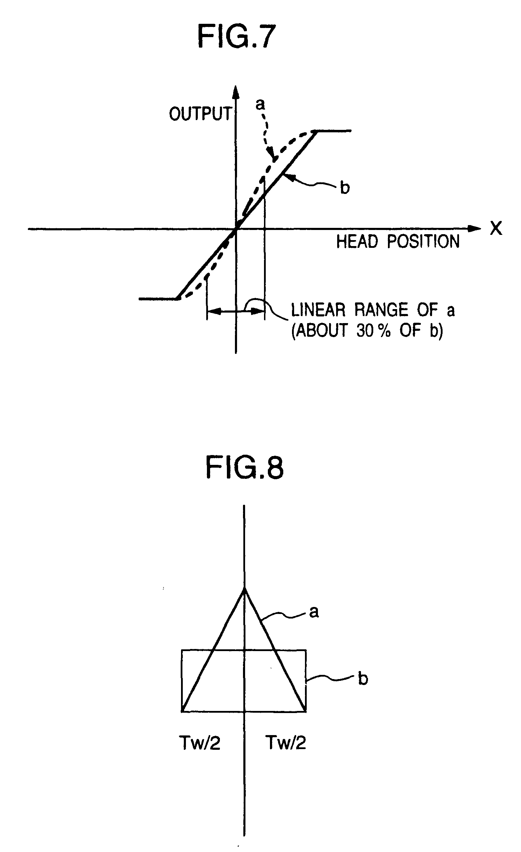

Fig. 6 is a model diagram showing a correlation when a magnetic head reads a servo pattern, namely, a position detection pattern. A positional signal is obtained by the difference between the output amplitude of the signal region of the (N+1) track and the output amplitude of the N track region. Fig. 7 shows an example in which the magnetic head shown in Fig. 6 has two kinds of sensitivity distributions as shown in a and b of Fig. 7. Fig. 8 is a diagram showing a case (a) where the sensitivity distribution shows an isosceles triangle and a case (b) where the sensitivity distribution when assuming a conventional head is constant. In case of having the sensitivity distribution of a triangle, consequently, an area in which the sensitivity distribution of only about 30% of the track width regarded to be linear is obtained. The MR head has an intermediate sensitivity distribution between the triangle and the shape of the conventional type.

According to the invention, in the disk apparatus of the data surface servo method such as a sector servo method or the like, even in the case where an effective linear reproducing area width of the reproducing head is narrower than the track pitch, a good position detection can be realized without widening the track ID code and the servo area.

The object underlying the invention is accomplished by the magnetic disc apparatus of claim 1.

Since the magnetic disk apparatus to which the invention is applied has such a construction, a two-phase servo pattern repetitive period can be set to 4/3 (2 x 2/3) of the track pitch or to be equal (2 x 1/2) to the track pitch. Even when the effective linear reproducing width of the reproducing head is narrow, since a state in which an output is not changed for a position change doesn't occur, a position signal can be preferably demodulated. Since the width of the track ID code is set to 2/3, 1/3, or 1/2 of the track pitch, the position can be accurately detected by the track ID code and the position signal. Since the width of the track ID code is also set to a value that is integer times as wide as the minimum feeding width upon recording of the servo pattern, a burden upon servo writing by the recording of the ID code doesn't occur as well.

A linearity of the position signal for the track position of the head can be improved and even in the reproducing head whose track width is substantially equal to or less than 1/2 of the track pitch, the position can be decided at an arbitrary position. A stability of the servo system and a positioning at a high precision can be accomplished, thereby realizing a high density of the magnetic disk.

### BRIEF DESCRIPTION OF THE DRAWINGS

Fig. 1 is a diagram showing an embodiment of a servo pattern of the invention;
Fig. 2 is a diagram for explaining a state in which a position signal and a track ID signal are demodulated from the pattern in Fig. 1;
Fig. 3 is a diagram showing another embodiment of the invention;
Fig. 4 is a diagram for explaining a state in which a position signal and a track ID signal in a pattern in Fig. 3 are demodulated;
Fig. 5 is a schematic constructional diagram of a disk apparatus;
Fig. 6 is a diagram for describing an example of a relation between a moving direction and a pattern;
Fig. 7 is a diagram showing outputs of position signals of two magnetic heads; and
Fig. 8 is a diagram for explaining a detection sensitivity distribution of the magnetic head.

### DESCRIPTION OF THE PREFERRED EMBODIMENTS

The invention relates to a positioning of heads in an apparatus of a data surface servo method such as a sector servo method or the like. Embodiments of the invention will now be described hereinbelow with reference to the drawings. Fig. 1 shows two-phase servo patterns 101 of the invention and shows an example in which a pattern period 103 is equal to 4/3 of a track pitch and an ID code 100 width is equal to 2/3 of the track pitch. On the left side, a relative relation of a recording head (HW) and a reproducing head (HR) for a pitch is shown. In order to record such a pattern, a pattern is overwritten by an apparatus generally called a servo track writer while sequentially repeating a recording of the pattern, a feeding of the head, a recording of the pattern, a feeding of the head, ... from the outer rim side or inner rim side. When recording the pattern, since it is executed on the basis of a clock synchronized with a rotation, a phase in the radial direction can be matched. In case of Fig. 1, the track ID code 100 and the pattern are simultaneously recorded by feeding at a pitch of 1/3 of the track pitch. A fact that the pattern can be written at the 1/3 pitch is obtained by an effect such that the width of the track ID code 100 is set to be smaller than the track pitch and is matched with the pattern period 103. When the width of the track ID code 100 is set to be equal to the track pitch, the head has to be fed at a 1/6 pitch. In Fig. 1, reference numeral 102 denotes a data area and 104 indicates a track center. 105 denotes a width of a data track. (P) denotes a track pitch. In Fig. 1, A and B denote one phase, and C and D denote another phase.

Fig. 2 shows a situation of relations among the track position, the position signal obtained from the example of Fig. 1, and the track ID code 100. Demodulations of position signals N and Q are obtained as N: [(signal amplitude of an A portion) - (signal amplitude of a B portion)] and Q: [(signal amplitude of a C portion) - (signal amplitude of a D portion)]. A symbol (d) in Fig. 2 denotes a repeatability of the position signal. The track ID signal is a code called a gray code in which a code differs by only one bit between the adjacent tracks. Three codes are allocated every two tracks. Due to the nature of the gray code, either one of the two codes which are neighboring at arbitrary positions can be recognized and a decision range in the ID code is equal to 4/3 of the track pitch. On the other hand, since the repetitive period of the position signal is equal to 4/3 (d) of the track pitch, the position of the head can be decided by also considering a state of the position signal and Gray code. Such a point results in an effect that is obtained by setting the gray code to be smaller than the track pitch. In the case where the effective track width of the reproducing head that is substantially equal to only about 1/3 of the track pitch is obtained, if the track ID code 100 has a width of 1/3 of the track pitch in the pattern in Fig. 1, then a similar effect is also obtained.

Although the invention relates to the servo pattern 101, a schematic construction and the operation of the disk apparatus when using the pattern in Fig. 1 will now be described.

Fig. 5 is a schematic constructional diagram of a control system of the disk apparatus. When a target track is given from a controller 9, a difference between the present position and a target position is calculated and a head movement (seeking operation) is started. All of controls for the seeking operation and a following operation at the target track are executed by a DSP (digital signal processor) 6. As for a position of a head 10, a read back signal of the MR head is amplified by a reproducing amplifier 2, amplitudes of A, B, C, and D areas are detected as mentioned above by a demodulator 3, and those information is transmitted to the DSP 6 through an A/D converter 5, thereby performing the position detection [arithmetic operations of (A - B) and (C - D)] described in Fig. 2. The track ID code 100 of the signal after completion of the amplification is converted to the code by a discriminator 4, thereby recognizing the track ID code 100 by the DSP. The DSP detects a position every sector from the track ID signal and the position signal and calculates a signal for a control. As mentioned above, while detecting the head position, the head is moved to the target position and the recording and reproducing operations are performed at the target position. Although the control system of the disk apparatus in Fig. 5 is not directly described in the above explanation, the control system has an HDA (head disk assembly) 1, the discriminator 4, a D/A converter 7, and a power amplifier 8.

In Fig. 2, for example, T0, T1, ... indicate target positions upon recording. Data areas at that time are shown in Fig. 1. The head which is used in the invention is a combination head in which the MR head and a head only for recording are integrated. When the positions of the recording head and the reproducing head (MR head) are deviated, a recording area is also deviated from the track center 104 in accordance with the deviation amount between the reproducing head and the recording head.

As mentioned above, since the track ID code 100 doesn't correspond to a track number in a one-to-one corresponding manner different from the conventional apparatus, the DSP has therein a lookup table 61 of the track ID code 100 for the track. For example, in a T2 track, since the ID code exists at a boundary between 0010 and 0110, an ID code for T2 is set to 0010 or 0110. On the other hand, in case of the track T1, the ID code is set to 0011. The track ID code 100 indicates an area and the position in such an area is decided by the position signal. For example, in T2, a position signal of Q is positive and N indicates a position of O. As mentioned above, when either one of N and Q is used as a control signal, another one specifies an area narrower than the track ID range.

As described above, the magnetic disk apparatus performs a closed loop control. When considering a necessity of the offset operation of the head, it is important to assure the linearity at an arbitrary position of the position signal in order to obtain a necessary positioning precision. In Fig. 2, the linearity at an arbitrary position is accomplished by alternately switching the linear areas of N and Q (bold line portions in Fig. 2). At this time, a using range of each of N and Q is equal to the 1/3 track pitch and there is an effect that is obtained by setting the period of the servo pattern 101 to a value smaller than the track pitch.

According to the invention, the track ID signal and the servo pattern 101 are devised for the head which has the sensitivity distribution in the direction of the track width and whose linear area is narrower than the track pitch as in the MR head. The invention is not limited to a demodulating circuit, a discriminating method, the number of phases of the patterns, address information, a control technique, and the like.

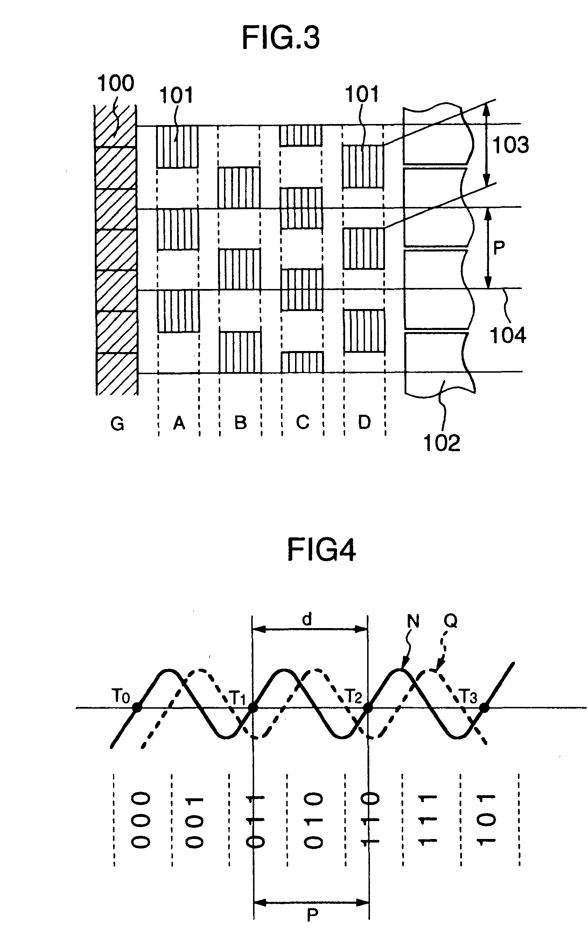

As for a head having a further narrow track width, a pattern such that the repetitive period of the servo pattern 101 is equal to the track pitch has been devised. Figs. 3 and 4 show diagrams corresponding to Figs. 1 and 2. In this case, the head is fed every 1/4 track pitch and the track ID signal and the servo pattern 101 are recorded. The width of the track ID signal is set to a value that is equal to or less than the 1/2 track pitch width from a viewpoint of the position signal repeatability (d).

## Claims

1. A magnetic disk apparatus comprising:
a magnetic disk having
a plurality of data tracks interspersed with servo sectors, the servo sectors comprising a track ID code field (G) with track ID code elements (100) oriented along the width of the tracks, and
first to fourth servo fields (A, B, C, D) with servo pattern elements (101) oriented perpendicular to the tracks, the servo pattern elements (101) having an offset in the radial direction of the disk from adjacent pattern elements (101) in the other servo fields, wherein a radial width of the servo pattern elements (101) is smaller than the track pitch (P) ;
a magneto-resistive reproducing head (HR) for reading out said servo sectors and said data tracks, the effective width of the reproducing head (HR) being smaller than a track pitch (P); and
a positioning mechanism (2, 3, 4, 5, 6, 7, 8, 9) for positioning said magneto-resistive reproducing head (HR) to a predetermined data track on the basis of the read-out signal of said servo sectors;
**characterised** in that
the width in the radial direction of the disk of said track ID code elements (100) is smaller than the track pitch (P);
the first to fourth servo fields (A, B; C, D) being structured as two-phase servo patterns with the servo pattern elements (101) in the first and second servo fields (A, B) generating a radial position signal (N) having a phase offset to the radial position signal (Q) generated by the servo pattern elements (101) in the third and fourth servo field (C, D);
the servo pattern elements (101) in all the servo fields (A, B; C, D) having the same radial pattern period (103), wherein the track ID code element (100) width in the radial direction of the disk is half the radial pattern period (103).

2. The magnetic disk apparatus of claim 1, wherein the radial pattern period (103) is 4/3 of the track pitch (P).

3. The magnetic disk apparatus of claim 1, wherein the radial pattern period (103) is equal to the track pitch P.

4. The magnetic disk apparatus of claim 1, wherein the positioning mechanism (2, 3, 4, 5, 6, 7, 8, 9) comprises a digital signal processor (6) having a look-up table (61) which assigns one of said data tracks to the read-out of a track ID code (100) and of said two positional signals (Q, N) .

## Patentansprüche

1. Magnetplattenvorrichtung, umfassend:
eine Magnetplatte mit
einer Vielzahl von Datenspuren, zwischen denen Servosektoren verteilt sind, wobei die Servosektoren ein Spur-ID-Codefeld (G) umfassen, das entlang der Breite der Spur orientierte Spur-ID-Codeelemente (100) aufweist, und
ersten bis vierten Servofeldern (A, B, C, D) mit senkrecht zu den Spuren orientierten Servomuster-Elementen (101), die in Radialrichtung der Platte einen Offset von benachbarten Musterelementen (101) in den anderen Servofeldern und eine kleinere radiale Breite als die Spurteilung (P) aufweisen;
einen Magnetowiderstands-Wiedergabekopf (HR) zum Auslesen der Servosektoren und Datenspuren, wobei die effektive Breite des Wiedergabekopfs (HR) kleiner als die Spurteilung (P) ist; und
einen Positionierungsmechanismus (2, 3, 4, 5, 6, 7, 8, 9) zum Positionieren des Magnetowiderstands-Wiedergabekopfs (HR) auf eine vorbestimmte Datenspur auf Basis des ausgelesenen Signals von den Servosektoren;
dadurch **gekennzeichnet,** daß
die Breite der Spur-ID-Codeelemente (100) in Radialrichtung der Platte kleiner als die Spurteilung (P) ist;
die ersten bis vierten Servofelder (A, B; C, D) als zweiphasige Servomuster strukturiert sind, wobei die Servomuster-Elemente (101) in dem ersten und dem zweiten Servofeld (A, B) ein Radialpositions-Signal (N) erzeugen, das einen Phasenoffset zum durch die Servomuster-Elemente (101) in dem dritten und dem vierten Servofeld (C, D) erzeugten Radialpositions-Signal (Q) aufweist, und
die Servomuster-Elemente (101) in allen Servofeldern (A, B; C, D) dieselbe radiale Musterperiode aufweisen und die Breite des Spur-ID-Codelements (100) in Radialrichtung der Platte gleich der Hälfte der radialen Musterperiode (103) ist.

2. Magnetplattenvorrichtung nach Anspruch 1, wobei die radiale Musterperiode (103) 4/3 des seitlichen Spurabstands (P) ist.

3. Magnetplattenvorrichtung nach Anspruch 1, wobei die radiale Musterperiode (103) gleich der Spurteilung (P) ist.

4. Magnetplattenvorrichtung nach Anspruch 1, wobei der Positionierungsmechanismus (2, 3, 4, 5, 6, 7, 8, 9) einen digitalen Signalprozessor (6) umfaßt, der eine Tabelle (61) aufweist, die dem Ausleseergebnis eines Spur-ID-Codes (100) und der zwei Positionssignale (Q, N) eine der Datenspuren zuweist.

## Revendications

1. Dispositif à disque magnétique comportant :
un disque magnétique ayant
une pluralité de pistes de données parsemées de secteurs d'asservissement, les secteurs d'asservissement comportant un champ (G) de code d'identification (ID) de piste ayant des éléments de code ID de piste (100) orientés le long de la largeur des pistes, et
des premier à quatrième champs d'asservissement (A, B, C, D) ayant des éléments de motif d'asservissement (101) orientés d'une manière perpendiculaire aux pistes, les éléments de motif d'asservissement (101) ayant un décalage dans la direction radiale du disque à partir d'éléments de motif adjacents (101) se trouvant dans les autres champs d'asservissement, une largeur radiale des éléments de motif d'asservissement (101) étant plus petite que le pas de piste (P),
une tête de lecture magnéto-résistive (HR) destinée à lire lesdits secteurs d'asservissement et lesdites pistes de données, la largeur effective de la tête de lecture (HR) étant plus petite qu'un pas de piste (P), et
un mécanisme de positionnement (2, 3, 4, 5, 6, 7, 8, 9) destiné à positionner ladite tête de lecture magnéto-résistive (HR) sur une piste de données prédéterminée sur la base du signal de lecture desdits secteurs d'asservissement,
caractérisé en ce que
la largeur dans la direction radiale du disque desdits éléments de code ID de piste (100) est plus petite que le pas de piste (P),
les premier à quatrième champs d'asservissement (A, B ; C, D) sont structurés sous la forme de motifs d'asservissement à deux-phases ayant les éléments de motif d'asservissement (101) des premier et second champs d'asservissement (A, B) générant un signal de position radiale (N) qui est en déphasage par rapport au signal de position radiale (Q) généré par les éléments de motif d'asservissement (101) des troisième et quatrième champs d'asservissement (C, D),
les éléments de motif d'asservissement (101) de tous les champs d'asservissement (A, B ; C, D) ont la même période de motif radial (103), la largeur d'un élément de code ID de piste (100) dans la direction radiale du disque étant égale à la moitié de la période de motif radial (103).

2. Dispositif à disque magnétique selon la revendication 1, dans lequel la période de motif radial (103) est égale à 4/3 le pas de piste (P).

3. Dispositif à disque magnétique selon la revendication 1, dans lequel la période de motif radial (103) est égale au pas de piste P.

4. Dispositif à disque magnétique selon la revendication 1, dans lequel le mécanisme de positionnement (2, 3, 4, 5, 6, 7, 8, 9) comporte un processeur de signaux numériques (6) ayant une table de recherche (61) qui attribue l'une desdites pistes de données à la lecture d'un code ID de piste (100) et desdits deux signaux positionnels (Q, N).
